# EUROPEAN PATENT APPLICATION

(11) **EP 3 730 895 A1**
(43) Date of publication of application: **28.10.2020**
(21) Application number: 19171170.4
(22) Date of filing: 25.04.2019
(51) Int. Cl.: F41G 1/38, G02B 7/00, G02B 23/00

(54) **RIFLE SCOPE ADJUSTMENT**

(71) Applicant: FX Airguns AB, 542 35 Mariestad (SE)
(72) Inventor: Axelsson, Fredrik, 542 92 Mariestad (SE)
(74) Representative: AWA Sweden AB

(57) **Abstract**

A rifle scope comprising a monocular, having an optical axis, a mounting fixture, for mounting the scope on a rifle, a turret for adjustment of the optical axis in the vertical plane with respect to the mounting fixture. The rifle scope further comprises a rotational turret sensor for detecting an angular position of the turret, a processor for translating the angular position of the turret to the relevant distance by comparing said angular position against a predetermined function or relationship, and a display, for displaying said distance to the user. By this suitable manual adjustment of the scope may be facilitated, while the need to manually apply visual indications per ammunition type on the turret is eliminated.

## Description

### Background

When shooting a rifle, the ballistics play an important role on the accuracy of the aiming. Therefore, scopes are usually adjusted such as to meet this prerequisite. This adjustment relies on a number of factors including but not limited to the distance to the target, and the type and size of the ammunition in use. In short, the ballistics of any given trajectory are dependent on the target distance. Therefore, there is a need to align the scope in the vertical plane such that the ballistic trajectory of the fired ammunition intersects the optical axis of the scope precisely on the target location.

In addition, since the mass and physical morphology of a given object also play important roles in the ballistic trajectory, for a given distance, there is a need to adjust the optical axis of the scope based on the type of utilized ammunition.

The rifle scope is usually adjusted manually though a rotatable knob, typically referred to as the turret. By rotating the turret, the rifle scope is adjusted in a vertical plane relative to the rifle bore. Each angular position is correlated to a distance, or in a more general sense ballistic coefficients, which are indicated by markers, on or in relation to the turret. It is generally the case that, the provided ballistic coefficients are specific to a certain ammunition type.

WO 2017/152919A1 discloses a gauge for a rifle scope, the gauge comprising indications related to one or more ballistic coefficients related to at least one specific bullet. The gauge comprises a belt being provided with the indications related to one or more ballistic coefficients related to at least one specific bullet. The belt is in frictional engagement with an outer surface of the scope turret or of a turret wheel, if a turret wheel is provided. The gauge also comprises a support wheel positioned at a distance from the scope turret or at a distance from the turret wheel. The belt extends between the scope turret or turret wheel and the support wheel.

However, this manual adjustment may become cumbersome and time consuming when it comes down to changing the gauge per ammunition. In addition, the accuracy of manual installation of the gauge, and calibration and adjustment of the scope is always subject to human error, which would consequently result in missed shots.

Advanced rifle scopes with semi or fully automated adjustability are disclosed in prior art, and are available for purchase. US 9,612,115 discloses such viewing device as follows: a laser rangefinder circuit configured to capture range data associated with a target within a view area and at least one sensor configured to capture orientation data associated with an aim-point of the laser rangefinder circuit concurrently with capturing the range data. The viewing device further includes a controller coupled to the laser rangefinder and to the at least one sensor and configured to automatically determine a range to the target from the range data based on the orientation data and a target location within the view area. However, such solutions to rifle scope adjustments are complex, thus expensive, and therefore there is a need for simple and more cost effective solutions.

Therefore, there is a need for improvements in methods of ballistic coefficient indicators conventionally used in rifle scope adjustments.

### Summary of the invention

It is an object of the present invention to provide a digital solution for the definition of ballistic coefficients when adjusting a rifle scope, and the calibration of the rifle for different ammunition types by means of the digital solution.

According to a first aspect, this object may be realized by a rifle scope comprising a monocular, having an optical axis, a mounting fixture, for mounting the scope on a rifle, and a turret for adjustment of the optical axis in the vertical plane with respect to the mounting fixture. The rifle scope further comprises a rotational turret sensor for detecting an angular position of the turret, a processor for translating the angular position of the turret to the relevant distance by comparing the angular position against a predetermined function or relationship, and a display, for displaying the distance to the user.

By this, suitable manual adjustment of the scope may be facilitated, while the need to manually apply visual indications on the turret is eliminated.

The turret sensor may be an optical or magnetic rotational sensor, such as an optical incremental encoder, an optical absolute encoder, or a resolver respectively. Such sensors with sufficient angular resolution are readily available at reasonable cost, and may be fitted on a scope turret without significant difficulty.

The optical axis, refers to the optical axis of the monocular, which in turn is defined as the imaginary line that runs through all optical components of the system, and approximately defines the path along which light propagates through the system. In a correctly aligned rifle, the optical axis of the rifle scope will point at the target.

The predetermined function or relationship provides a mapping between a given turret angular position and a target distance (for the specific rifle and for a specific ammunition type), and needs to be determined (as disclosed further in the text) based upon the in a calibration step process, wherein the angular position of the turret repeatedly (at least twice) is registered to a target distance set by the user. Based on the set of registrations (at least two but preferably at least three) a complete relationship can be interpolated, numerically fitted, or analytically calculated, and then stored as a look-up table or otherwise made available to the processor.

In a preferred embodiment, therefore, the scope further comprises a user interface to enable such a calibration process, wherein the processor is then further adapted to perform calibration in steps of receiving a first target distance communicated by the user through the user interface, and associating a first angular position of the turret detected by the rotational turret sensor with the first target distance upon second communication from user, receiving at least a second target distance communicated by the user through the user interface, and associating a second angular position of the turret detected by the rotational turret sensor with the at least second target distance upon second communication from user, and determining the function or relationship between any arbitrary distance and the angular position of the turret based on the data acquired from the association of the first and second angular position to the first and second target distance respectively.

The user interface and the display may be embedded within a single communication portal such as a touch screen.

In a preferred embodiment, the scope comprising a rotatable mechanical focusing ring, the rotatable mechanical focusing ring when rotated allows adjustment of the focus of the scope, and provides a physical reading of the focal distance.

Adjusting the focus of the scope may provide a better visual of the target. The focal distance of any given lens, or set of lenses, is defined as the distance to the plane where all optical beams originated from the object are converged to form the sharpest image of the object. By rotating the focus ring the optical components, for instance but not necessarily limited to the lenses and the image plane, may be adjusted relevant to each other and/or the image plane until the focal plane and the image plane are positioned precisely at the same plane. Note that, the image plane of any optical device is the plane where the image of the object is projected, for instance on the sensor, and is a predefined value specific to that optical device.

A physical reading of the focal distance may be provided on the focusing ring, so that a user may easily determine the focal distance, and thus the distance to the target.

Alternatively, the focal adjustor is provided with a sensor for detecting the angular position and thus the corresponding focal distance. Such a sensor may be connected to the processor and the display, to enable showing the distance to target on the display, even further facilitating adjustment of the scope.

In another embodiment, the optical axis of the scope is adjusted in the vertical plane by physical adjustments of the scope housing.

In this embodiment the entire, or either ends of the housing of the scope can be adjusted in the vertical plane relevant to the rifle bore.

In an alternative embodiment, the scope wherein the optical axis is adjusted in the vertical plane by physical adjustment of the optical components comprising the scope within the scope housing.

In this embodiment, the housing of the scope may remain static, while in order to adjust the optical axis, some or all of the optical components comprising the scope, for instance lenses, may be adjusted.

According to another aspect of the invention, the above object is achieved by a method for adjusting a rifle scope, the scope comprising a monocular, having an optical axis, a mounting fixture, for mounting the scope on a rifle, a turret for adjustment of the optical axis in the vertical plane with respect to the mounting fixture the method characterized by detecting the angular position of the turret, translating the angular position of the turret, by a processor, to the relevant distance by comparing the angular position against a predetermined function or relationship, and displaying the distance to the user on a display.

Through this method, suitable manual adjustment of the scope may be realized, while the need to manually apply visual indications per ammunition type on the turret is eliminated.

According to one embodiment, the method further comprises calibration of the rifle scope including: receiving a first target distance communicated by the user, and detecting a first angular position of the turret, and associating the detected angular position with the first target distance, receiving a second target distance communicated by the user, and detecting a second angular position of the turret, and associating the detected angular position with the second target distance, and determining the function or relationship between any arbitrary distance and the angular position of the turret based on the data acquired from the association of the first and second angular positions to the first and second target distance respectively.

In a preferred embodiment of the invention, the method further comprises calibration of the rifle scope, further including: receiving a third or several additional target distance communicated by the user, and detecting a third or several additional angular position of the turret, and associating the detected angular position with the third or several additional target distance, and determining the function or relationship between any arbitrary distance and the angular position of the turret based on the data acquired from the association of the first and second and third or several additional angular positions to the first and second and third or several additional target distance respectively.

For better calibration of any system at least two, preferably three or more datasets are required. By repeating the latter mentioned method for calibration a third and possibly several additional times, a more accurate determination of the relation or function through mathematical fitting or comparison algorithms between the provided datasets will be obtained.

### Brief description of the drawings

The present invention will be described in more detail with reference to the appended drawings, showing currently preferred embodiments of the invention.
Figure 1 is a schematically shows a rifle scope mounted onto a rifle, and a block diagram of an adjustment device according to an embodiment of the present invention.
Figure 2 shows the relationship between a rifle scope optical axis and a fired ammunition trajectory.
Figure 3 is a flow chart of a method for adjusting a rifle scope according to an embodiment of the invention.
Figure 4 is a flow chart of a method for calibrating the rifle scope according to a further embodiment of the invention.

### Detailed description of the drawings

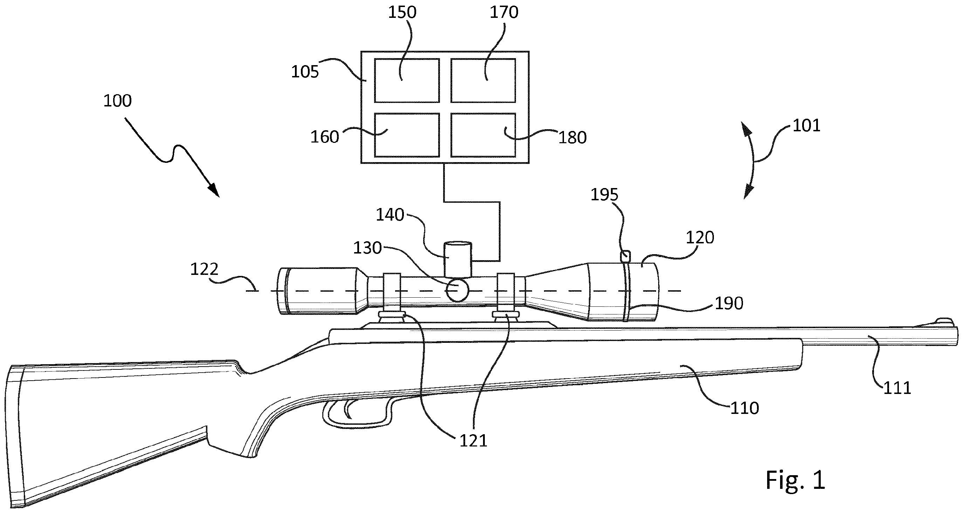

Fig. 1 schematically demonstrates a rifle 110, with a scope 120 mounted onto the rifle 100 using mounting fixtures 121. The scope 120 includes a so called turret 130 for vertical adjustment of the scope 120 in relation to the rifle 110. By rotating the turret 130, the optical axis 122 of the scope 120 may be adjusted in the vertical plane 101 in relation to the mounting fixture 121, or the rifle bore 111.

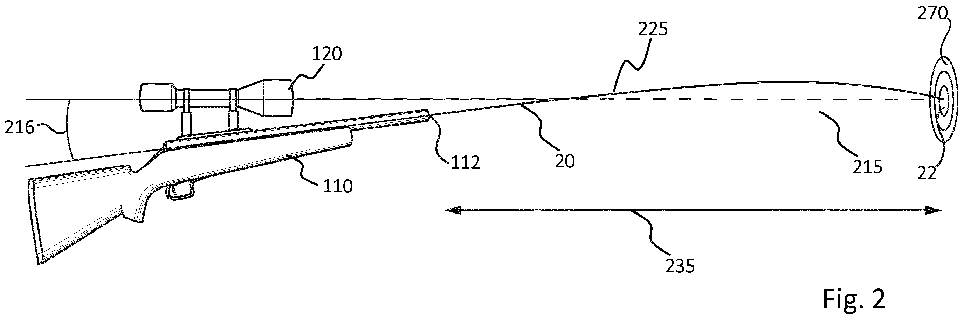

With reference to figure 2, the turret 130 is used to adjust the scope 120 such that the optical axis 122 of the scope 120 intersects the ballistic trajectory 225 of the fired ammunition 225 precisely at the target 270 location. Hence, the chances of successfully hitting the target 270 when shooting the rifle 110 are significantly improved. Note that the angle 216 between the rifle 110 and the scope 120 is exaggerated in this illustration.

As it can be seen in Fig. 2, the ballistic trajectory 225 and the optical axis 122 intersect each other at a first point 20, and a second point 22, which in case of correct alignment of the scope 120 in the vertical plane 101, is on the target 270. It is notable that, since the first point of intersection 20 is typically not of interest, throughout this document where ever intersection of ballistic trajectory of fired ammunition 225 and optical axis 122 is mentioned, unless stated otherwise refers to the second point of intersection 22. It is clear that the turret 120 needs to be adjusted for each specific target distance 235.

Returning to figure 1, the rifle 110 is further provided with an adjustment device 105, comprising a rotational turret sensor 140 connected to the turret 130, a display 150, a user interface 160, a processor 170, and a memory 180.

The rotational turret sensor 140 may detect the angular position of the turret 130. The angular position of the turret 130 may then be translated by the processor 170 to the relevant distance. The processor 170 performs this act by comparing the angular position against a predetermined function or relationship, readily available in the processors 170 memory 180. The predetermined function or relationship provides a mapping between a given turret setting (i.e. vertical scope adjustment) and corresponding target distance, for the specific rifle and for a specified ammunition type. The distance is thereafter displayed to the user through a display 150.

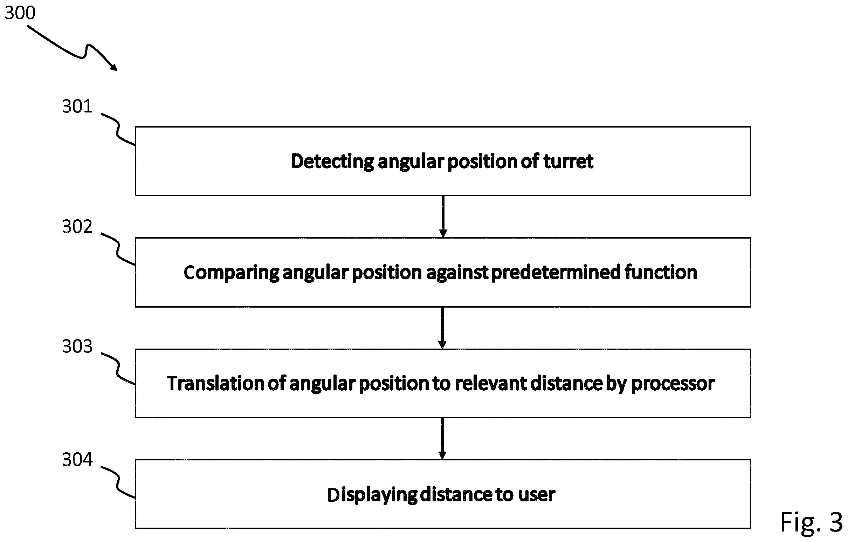

Fig. 3 shows a flow diagram of an embodiment of a method 300 of adjusting a rifle scope 120.

At 301, the angular position of the turret 130 may be detected by a rotational turret sensor 140. Continuing to 302, the angular position of the turret 130 may be compared against a predetermined function or relationship by a processor 170. The predetermined function or relationship provides a mapping between a given turret angular position and a target distance, and needs to be determined based upon the calibration step process as discussed below.

The relationship is specific to the rifle and to the type of ammunition. Therefore, step 301 will typically be preceded of a step where the user indicates (using the user interface 160) which type of ammunition that will be used, so that the device 105 may select the appropriate predetermined relationship.

Moving on to 303, through the mentioned comparison, the angular position of the turret 130 may be translated to a relevant distance by the processor 170. Finally, arriving at 304, the distance may be displayed to the user through a display 150.

Guided by this distance indication on display 150, the user may easily adjust the rifle scope to an actual known or estimated target distance.

In one embodiment, the actual target distance is obtained from a rangefinder (e.g. a parallax rangefinder) 190 provided on the rifle (see figure 1). The rangefinder 190 provides a means for estimating the target distance (range).

The rangefinder 190 typically includes an adjustable ring (like a camera focal adjustor). In a simple case, the adjustor ring is provided with physical distance indications. When the adjustor ring has been correctly adjusted, the target distance can then be read directly on the adjustor ring.

Alternatively, the rangefinder 190 is provided with a sensor 195 (e.g. a rotational sensor to detect the angular position of an adjustor ring), and the angular position is provided to the processor 170. The processor 170 may convert the angular position to a target distance (e.g. using a look-up table), and display the target distance on the display 150.

Although not shown in figure 1, the scope may be provided with an actuator (e.g. stepping motor) to automatically adjust the scope turret 130 based on a given distance. When such an actuator is combined with a rangefinder sensor 195 as discussed above, the scope adjustment may be performed semi-automatically, based on the rangefinder adjustment.

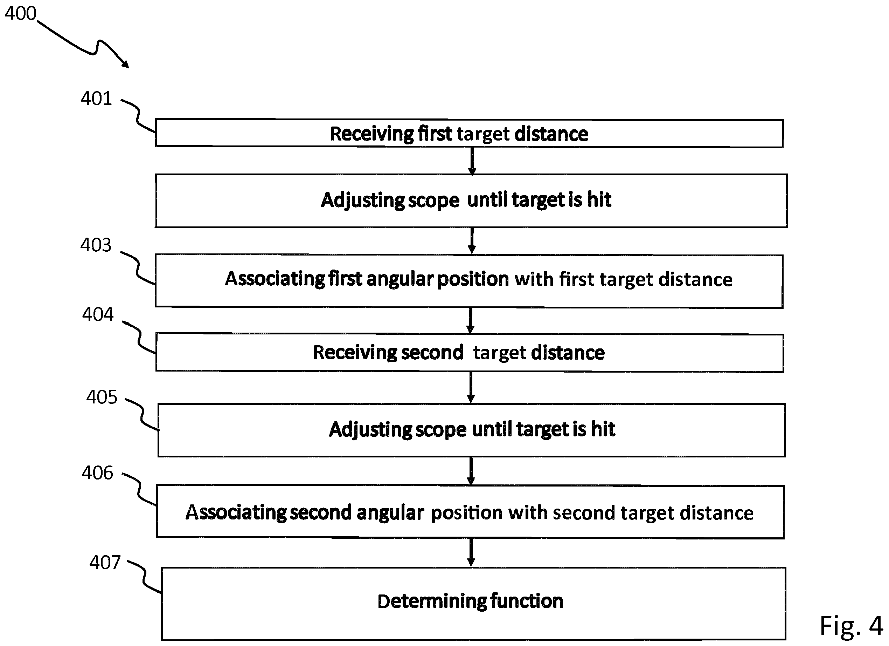

Fig. 4 shows a flow diagram of an embodiment of a method 400 for calibration of the scope through a user interface 160 (which may be embedded within the display 150).

At 401, the processor 170 of the scope 120, receives a first distance to target communicated by the user through the interface 160. This distance may in practice be the distance to a known target positioned at an exact predetermined distance. The user may then adjust the scope 120 by rotating the turret 130, followed by aiming and shooting the target 270. The user may repeat this act until the scope 120 is adjusted to the correct position meaning that the optical axis 122 of the scope 120 is aligned such that it intersects the ballistic trajectory 225 of the fired ammunition exactly on the target 270, and the target 270 is hit. Advancing to 403, on a second communication by the user through the user interface 160, the processor 170 may associate a first angular position of the turret 130 detected by the rotational turret sensor 140, to the first target distance.

Performing calibration necessitates that the latter mentioned steps of the method 400 be performed at least a second time. Therefore, continuing to 404, the processor 170 of the scope 120, receives an at least second target distance communicated by the user through the interface 160. At step 405 of the method 400, the user may then adjust the scope 120 by rotating the turret 130, followed by aiming and shooting the target 270. The user may repeat this act until the scope 120 is adjusted to the correct position meaning that the optical axis 122 of the scope 120 is aligned such that it intersects the ballistic trajectory 225 of the fired ammunition exactly on the target 270, and the target 270 is hit. Moving on to 406, on a second communication by the user through the user interface 160 the processor 170 may associate an at least second angular position of the turret 130 detected by the rotational turret sensor 140, to the at least second target distance.

Finally arriving at 407, the processor 170 may determine a function or relationship between any arbitrary distance and the angular position of the turret 130 based on the data acquired from the association of the first and second angular positions to the first and second target distances respectively.

Specifically, in the case of calculating the relation or function by mathematical fitting, two distances may suffice to give an accurate fit. However, for more precise calibration it is preferred that the latter mentioned step be repeated for additional, at least a third distance. This is in order to prevail more accurate determination of the relation or function through mathematical fitting or comparison algorithms between three or more datasets.

The determined relationship is specific to the ammunition used in the calibration process, and is preferably stored in memory 180 together with some indication of the ammunition type. In use, the user may then indicate the ammunition type used, to enable the device 105 to access the appropriate relationship between turret position and distance from memory 180.

The person skilled in the art realizes that the present invention by no means is limited to the preferred embodiments described above. On the contrary, many modifications and variations are possible within the scope of the appended claims. For example, as stated earlier, different types of sensors may be utilized as the turret sensor, as well as the focal sensor. In addition, and as again mentioned earlier in the description, the adjustment of the optical axis may be obtained by readjusting the optical components sitting within the scope housing relative to one another, instead of physically adjusting the entire rifle scope in relation to the rifle bore.

## Claims

1. A rifle scope comprising
a monocular, having an optical axis,
a mounting fixture, for mounting the scope on a rifle,
a turret for adjustment of the optical axis in the vertical plane with respect to the mounting fixture
**characterized by**
a rotational turret sensor for detecting an angular position of the turret, a processor for translating the angular position of the turret to the relevant distance by comparing said angular position against a predetermined function or relationship, and
a display, for displaying said distance to the user.

2. The scope according to claim 1, further comprising a user interface, wherein said processor is further adapted to perform calibration in steps of
receiving a first target distance communicated by the user through said user interface, receiving an indication that the rifle scope is correctly adjusted, and in response to this indication associating a first angular position of the turret detected by the rotational turret sensor with said first target distance,
receiving a second target distance communicated by the user through said user interface, receiving an indication that the rifle scope is correctly adjusted, and in response to this indication associating a second angular position of the turret detected by the rotational turret sensor with said second target distance, and
determining said function or relationship between any arbitrary distance and the angular position of the turret based on the data acquired from the association of the first and second angular position to the first and second target distance respectively.

3. The scope according to claim 1, comprising a rotatable mechanical focusing ring, said rotatable mechanical focusing ring when rotated allows adjustment of the focus of said scope, and provides a physical reading of the focal distance.

4. The scope according to claims 1 and 4, wherein through a second sensor, said processor calculates the distance to the target, and communicates said distance to the user through said user interface.

5. The scope according to claim 1, where the optical axis is adjusted in the vertical plane by physical adjustments of the scope housing.

6. The scope according to claim 1, wherein the optical axis is adjusted in the vertical plane by physical adjustment of the optical components within the scope housing.

7. A method for adjusting a rifle scope comprising a monocular, having an optical axis, a mounting fixture, for mounting the scope on a rifle, and a turret for adjustment of the optical axis in the vertical plane with respect to the mounting fixture, the method comprising:
detecting of the angular position of the turret
translating of said angular position of the turret, by a processor, to the relevant distance by comparing said angular position against a predetermined function or relationship, and
displaying said distance to the user on a display.

8. The method according to claim 7, further comprising calibration of the rifle scope through a user interface, including:
receiving a first target distance communicated by the user,
and detecting a first angular position of the turret, and associating the detected angular position with said first target distance,
receiving a second target distance communicated by the user,
and detecting a second angular position of the turret, and associating the detected angular position with said second target distance, and
determining said function or relationship between any arbitrary distance and the angular position of the turret based on the data acquired from the association of the first and second angular positions to the first and second target distance respectively.

9. The method according to claim 8 comprising calibration of the rifle scope, further including:
receiving a third or several additional target distance communicated by the user,
and detecting a third or several additional angular position of the turret, and associating the detected angular position with said third or several additional target distance, and
determining said function or relationship between any arbitrary distance and the angular position of the turret based on the data acquired from the association of the first and second and third or several additional angular positions to the first and second and third or several additional target distance respectively.
